(19) Europäisches Patentamt
European Patent Office
Office européen des brevets

(11) EP 3 840 473 B1

(12) FASCICULE DE BREVET EUROPEEN

(45) Date de publication et mention
de la délivrance du brevet:
**29.06.2022 Bulletin 2022/26**

(21) Numéro de dépôt: **20214045.5**

(22) Date de dépôt: **15.12.2020**

(51) Classification Internationale des Brevets (IPC):
**H04W 40/12** *(2009.01)*    **H04W 40/24** *(2009.01)*
**H04L 45/12** *(2022.01)*    **H04W 88/08** *(2009.01)*

(52) Classification Coopérative des Brevets (CPC):
**H04W 40/246; H04W 40/12;** H04L 45/124;
H04W 88/08

(54) **PROCÉDÉ ET DISPOSITIF DE DÉTERMINATION D'UNE TOPOLOGIE D'UN RÉSEAU DE POINTS D'ACCÈS SANS FILS**

VERFAHREN UND VORRICHTUNG ZUR BESTIMMUNG EINER TOPOLOGIE EINES DRAHTLOSEN ZUGANGSPUNKTNETZES

METHOD AND DEVICE FOR DETERMINING A TOPOLOGY OF A NETWORK OF WIRELESS ACCESS POINTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2019 FR 1915181**

(43) Date de publication de la demande:
**23.06.2021 Bulletin 2021/25**

(73) Titulaire: **SAGEMCOM BROADBAND SAS**
**92500 Rueil-Malmaison (FR)**

(72) Inventeurs:
• **LE ROUX, Sylvain**
**92500 RUEIL MALMAISON (FR)**
• **REUCHE, Anthony**
**92500 RUEIL MALMAISON (FR)**

(74) Mandataire: **Cabinet Le Guen Maillet**
**3, impasse de la Vigie**
**CS 71840**
**35418 Saint-Malo Cedex (FR)**

(56) Documents cités:
**EP-A1- 2 899 931**    **EP-B1- 2 899 931**
**US-A1- 2007 286 097**

**Description**

DOMAINE TECHNIQUE

L'invention concerne un procédé et un dispositif de détermination d'une topologie d'un réseau de points d'accès sans fils.

ETAT DE LA TECHNIQUE ANTERIEURE

La détermination d'une topologie dans un réseau de points d'accès sans fils est souvent basée sur des algorithmes de recherche d'un chemin dans un graphe. Par exemple, l'algorithme de Dijkstra permet de résoudre le problème du plus court chemin d'un point à un autre. Plus précisément, il calcule des plus courts chemins à partir d'une source dans un graphe orienté pondéré par des réels positifs.

L'utilisation d'un tel algorithme dans un réseau domestique comprenant plusieurs points d'accès sans fils donne un résultat qui n'est pas adapté aux différents équipements qui sont reliés aux points d'accès. Ces équipements sont par exemple des décodeurs audio/vidéo, des téléviseurs, des téléphones ou des équipements échangeant des données.

La demande de brevet EP2899931 divulgue un procédé de détermination d'une topologie d'un réseau de communication composé d'une pluralité de nœuds.

Il est alors souhaitable de pouvoir déterminer une topologie d'un tel réseau qui soit adaptée aux différents types d'équipements qui sont reliés aux points d'accès.

EXPOSE DE L'INVENTION

La présente invention est définie par les revendications indépendantes 1, 6, 8 et 9.

La présente invention a pour but de résoudre les inconvénients de l'art antérieur en proposant un dispositif et un procédé de détermination d'une topologie d'un réseau qui prend en compte les différents types d'équipements qui sont reliés aux points d'accès.

A cette fin, l'invention concerne un procédé de détermination d'une topologie d'un réseau de communication sans fils composé d'une pluralité de nœuds connectés ou non respectivement à au moins un équipement, un des nœuds dit nœud racine étant relié à un réseau extérieur, le procédé comportant les étapes de :

- détermination d'une classe de service pour chaque nœud, la classe de service étant déterminée en fonction de l'équipement relié au nœud, si le nœud est relié à un téléphone, la classe de service associée au nœud est de la classe voix sur IP VOIP, si le nœud est relié à un décodeur audiovisuel la classe de service associée au nœud est télévision sur IP TV Ultra Haute Définition IPTV UHD, si le nœud est relié à un téléviseur la classe de service associée au nœud est IP TV Haute Définition IPTV HD, pour les autres nœuds la classe de service associée est données,
- ou la classe de service de chaque nœud correspond à la classe de service déterminée pour chaque nœud par un usager du réseau de communication ou un opérateur du réseau de communication,
- obtention, de chaque nœud, d'informations représentatives de la qualité du lien entre le nœud et d'autres nœuds,
- calcul, pour chaque lien, de paramètres représentatifs de la qualité du lien,
- classement des nœuds selon leur classe de service et pour les nœuds ayant la même classe de service selon le nombre de liens composant le chemin qui les sépare du nœud racine,
- détermination, pour chaque nœud et selon le classement, de chemins possibles reliant le nœud au nœud racine,
- calcul, pour chaque chemin déterminé, d'un score à partir de paramètres représentatifs de la qualité du lien et à partir de valeurs de coefficients dépendantes de la classe de service du nœud,
- sélection du chemin pour le nœud ayant le score minimum.

L'invention concerne aussi un dispositif de détermination d'une topologie d'un réseau de communication sans fils composé d'une pluralité de nœuds connectés ou non respectivement à au moins un équipement, un des nœuds dit nœud racine étant relié à un réseau extérieur, le dispositif de détermination comportant:

- des moyens de détermination d'une classe de service pour chaque nœud, la classe de service étant déterminée en fonction de l'équipement relié au nœud, si le nœud est relié à un téléphone, la classe de service associée au nœudest de la classe voix sur IP VOIP, si le nœud est relié à un décodeur audiovisuel la classe de service associée au nœudest télévision sur IP TV Ultra Haute Définition IPTV UHD, si le nœudest relié à un téléviseur la classe de service associée au nœudest IP TV Haute Définition IPTV HD, pour les autres nœuds la classe de service associée est données, ou la classe de service de chaque nœud correspond à la classe de service déterminée pour chaque nœud par un usager du réseau de communication ou un opérateur du réseau de communication,

- des moyens d'obtention, de chaque nœud, d'informations représentatives de la qualité du lien entre le nœud et d'autres nœuds,
- des moyens de calcul, pour chaque lien, de paramètres représentatifs de la qualité du lien,
- des moyens de classement des nœuds selon leur classe de service et pour les nœuds ayant la même classe de service selon le nombre de liens composant le chemin qui les sépare du nœud racine,
- des moyens de détermination, pour chaque nœud et selon le classement, de chemins possibles reliant le nœud au nœud racine,
- des moyens de calcul, pour chaque chemin déterminé, d'un score à partir de paramètres représentatifs de la qualité du lien et à partir de valeurs de coefficients dépendantes de la classe de service du nœud,
- des moyens de sélection du chemin pour le nœud ayant le score minimum.

Ainsi, en prenant en compte le type d'équipement relié à chaque nœud et en lui attribuant une classe en fonction de l'équipement relié au nœud, en classant les nœuds en fonction de leur classe de service et en déterminant un score fonction de valeurs de coefficients dépendantes de la classe de service du nœud, la présente invention détermine une topologie optimale qui prend en compte les différents types d'équipements qui sont reliés aux points d'accès.

L'invention concerne aussi un programme d'ordinateur, caractérisé en ce qu'il comprend des instructions pour mettre en œuvre, par un dispositif, le procédé selon le premier aspect, lorsque ledit programme est exécuté par un processeur dudit dispositif.

L'invention concerne aussi des moyens de stockage, caractérisés en ce qu'ils stockent un programme d'ordinateur comprenant des instructions pour mettre en œuvre, par un dispositif, le procédé selon le premier aspect lorsque ledit programme est exécuté par un processeur dudit dispositif.

BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

[Fig. 1] représente schématiquement un réseau de communication sans fils constitué d'une pluralité de nœuds dans lequel la présente invention est implémentée ;
[Fig. 2] illustre schématiquement un exemple d'architecture matérielle d'un nœud qui détermine la topologie du réseau selon la présente invention ;
[Fig. 3] illustre l' algorithme exécuté par le nœud qui détermine la topologie du réseau selon la présente invention ;
[Fig. 4] illustre un exemple dans lequel tous les liens possibles entre les nœuds C et R du réseau de communication sans fil sont représentés ;
[Fig. 5] illustre un exemple de la topologie des chemins dans le réseau de communication sans fils déterminée par la présente invention.

EXPOSE DETAILLE DE MODES DE REALISATION

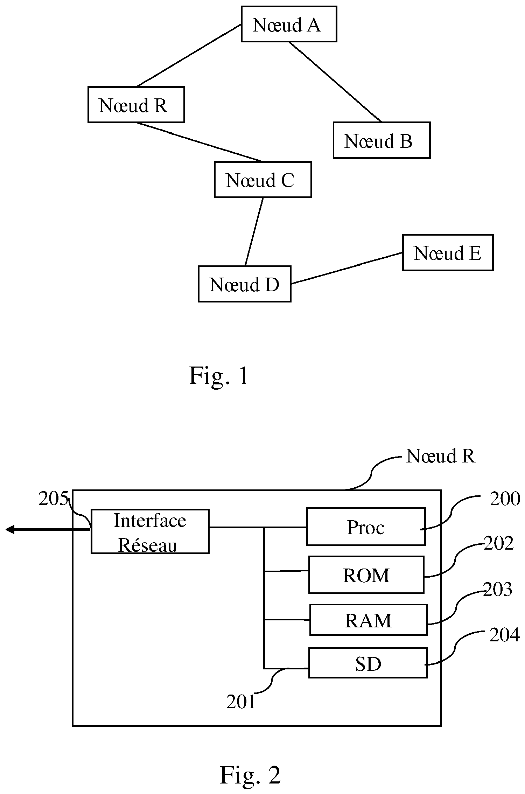

La Fig. 1 représente schématiquement un réseau de communication sans fil constitué d'une pluralité de nœuds dans lequel la présente invention est implémentée.

Le réseau de communication sans fil tel que représenté en Fig. 1 est composé de six nœuds. Le réseau de communication sans fil est par exemple un réseau de communication sans fil de type WIFI.

Le nœud R est un nœud dit racine. Le nœud R est par exemple une passerelle résidentielle qui relie le réseau de communication sans fils à un réseau extérieur tel qu'un réseau internet qui émet et reçoit des données. Le nœud R est selon l'invention le point de départ de l'arbre couvrant la topologie du réseau déterminée par la présente invention.

Les nœuds A, B, C, D et E sont reliés ou non respectivement à au moins un équipement.

Par exemple, le nœud B est un nœud relié à un téléviseur de haute définition, le nœud C est par exemple relié à un décodeur audiovisuel, le nœud D est par exemple relié à un téléphone.

Chaque nœud est apte à effectuer des mesures qualitatives sur chaque lien le reliant à un autre nœud. Par exemple, la présente invention est décrite dans un exemple qui utilise comme mesures qualitatives des mesures de débit physique (PHY rate) et des mesures de latence sur chaque lien le reliant à un autre nœud, mais d'autres types de mesures sont envisageables, comme par exemple le taux de perte de paquets.

Un seul nœud exécute l'algorithme selon la présente invention. La présente invention est décrite dans un exemple dans lequel le nœud R détermine la topologie du réseau. Bien entendu, la détermination de la topologie du réseau peut être effectuée par un autre nœud.

Le nœud qui détermine la topologie du réseau est appelé par la suite nœud concentrateur. Bien entendu la présente invention peut être exécutée par un dispositif informatique distant, par exemple compris dans le réseau extérieur.

Dans l'exemple de la Fig. 1, le nœud B est relié par un lien radio au nœud A, le nœud A est relié par un lien radio au nœud R, le nœud R est relié par un lien radio au nœud C, le nœud C est relié par un lien radio au nœud D et le nœud D est relié par un lien radio au nœud A.

Il est à remarquer que les liens reliant les nœuds peuvent être en totalité ou en partie des liens filaires.

La Fig. 2 illustre schématiquement un exemple d'architecture matérielle du nœud concentrateur qui détermine la topologie du réseau selon la présente invention.

Dans l'exemple de la Fig. 2, le nœud concentrateur est le nœud R.

Le nœud R comprend :

- un processeur, micro-processeur, ou microcontrôleur 200 ;
- une mémoire volatile 203 ;
- une mémoire non volatile 202 ;
- éventuellement, un lecteur 204 de médium de stockage tel qu'un lecteur de carte SD (Secure Digital Card en anglais ou Carte Numérique Sécurisée en français) ou un disque dur ;
- une interface réseau 205 ;
- un bus de communication 201 reliant le processeur 200 à la mémoire ROM 202, à la mémoire RAM 203, au lecteur de médium de stockage 204 et à l'interface 205.

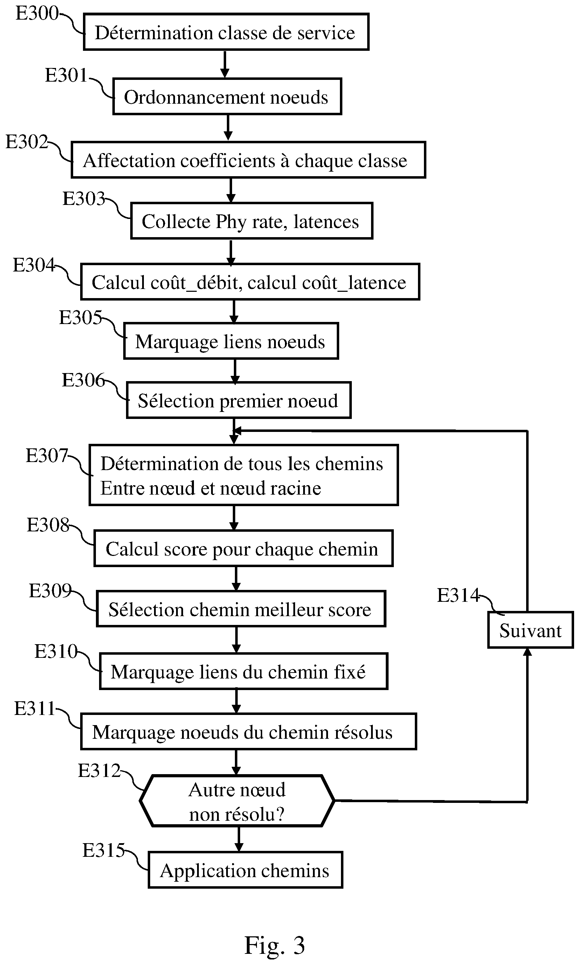

Le processeur 200 est capable d'exécuter des instructions chargées dans la mémoire volatile 203 à partir de la mémoire non volatile 202, d'une mémoire externe (non représentée), d'un support de stockage, tel qu'une carte SD ou autre, ou d'un réseau de communication. Lorsque le concentrateur 20 est mis sous tension, le processeur 200 est capable de lire de la mémoire volatile 203 des instructions et de les exécuter. Ces instructions forment un programme d'ordinateur qui cause la mise en œuvre, par le processeur 200, de tout ou partie du procédé décrit en relation avec la Fig. 3.

Tout ou partie du procédé décrit en relation avec la Fig. 3 peut être implémenté sous forme logicielle par exécution d'un ensemble d'instructions par une machine programmable, telle qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

La Fig. 3 illustre l' algorithme exécuté par le nœud qui détermine la topologie du réseau selon la présente invention.

A l'étape E300, le nœud concentrateur détermine la classe de service de chaque nœud du réseau de communication sans fil.

Chaque nœud informe le nœud concentrateur de la classe de service qui lui est associée. Si un nœud est relié à un téléphone, la classe de service associée au nœud est de la classe voix sur IP VOIP ; si le nœud est relié à un décodeur audiovisuel la classe de service associée au nœud est télévision sur IP TV Ultra Haute Définition IPTV UHD ; si le nœud est relié à un téléviseur la classe de service associée au nœud est IP TV Haute Définition IPTV HD. Pour les autres nœuds, la classe de service associée est données.

En variante, l'usager du réseau de communication ou l'opérateur du réseau de communication détermine la classe de service de chaque nœud par l'intermédiaire d'une interface graphique représentant les différents nœuds. L'usager ou l'opérateur attribue une classe de service à chaque nœud par l'intermédiaire de l'interface graphique.

Ainsi, la classe de service attribuée aux nœuds A, E et R est données, la classe de service associée au nœud B est IPTV UHD, la classe de service associée au nœud C est IPTV HD et la classe de service associée au nœud D est VOIP.

A l'étape E301, les nœuds sont ordonnés selon leur classe de service. Par exemple, les nœud dont la classe de service est IPTV UHD sont classés en premier, les nœuds dont la classe de service est IP TV HD sont classés après les nœuds dont la classe de service est IPTV UHD, les nœuds dont la classe de service est VOIP sont classés après les nœuds dont la classe de service est IPTV HD et les nœuds dont la classe de service est données sont classés après les nœuds dont la classe de service est VOIP.

Au sein d'une même classe de service, les nœuds sont classés selon le nombre de liens composant le chemin qui les sépare du nœud racine dans une topologie avant la mise en œuvre du procédé selon la présente invention. Par exemple nœud ayant le chemin le plus court est classé en premier. Lorsque deux nœuds d'une même classe de service ont le même nombre de liens composant le chemin qui les sépare du nœud racine, un choix arbitraire est par exemple effectué.

Ainsi, le nœud C est classé en premier, le nœud B est classé en second, le nœud D est classé en troisième, le nœud R est classé en quatrième, le nœud A est classé en cinquième et le nœud E est classé en sixième.

A l'étape E302, deux valeurs de coefficients α et β sont attribuées pour chaque classe de service. Par exemple, à la classe de service IPTV UHD sont attribuées les valeurs a=1 et β=0 ; à la classe de service IPTV HD sont attribuées les valeurs α=0.8 et β=0.2 ; à la classe de service VOIP sont attribuées les valeurs α=0 et β=1 et à la classe de données sont attribuées les valeurs α=0.5 et β=0.5. Ces valeurs de coefficients vont permettre par la suite de déterminer une topologie optimale qui est adaptée à chaque équipement relié à un nœud.

A l'étape E303, le concentrateur collecte de chaque nœud les mesures de débit physique (PHY rate) et les mesures de latence sur chaque lien reliant le nœud à un autre nœud.

A l'étape E304, le concentrateur caractérise chaque lien pour lequel il a obtenu les mesures de débit physique (PHY rate) et les mesures de latence. Le concentrateur détermine pour chaque lien la valeur d'une variable notée coût débit et la valeur d'une variable notée coût_latence à l'aide des formules suivantes :

$$\mathrm{Co\hat{u}t\_d\acute{e}bit}= 5-(5*\mathrm{Phy\ rate}/(\mathrm{Max}(\mathrm{Phy\ rates})))$$

$$\mathrm{Co\hat{u}t\_latence}= 5*(\mathrm{latence}-\mathrm{Min}(\mathrm{latences}))/\mathrm{Max}(\mathrm{latences}).$$

où Phy rate est la mesure du débit physique pour le lien, latence est la mesure de latence pour le lien, Max(Phy rate) est la valeur de débit physique maximale obtenue parmi l'ensemble des mesures de débit obtenues des liens, Max(latences) est la valeur de latence maximale obtenue parmi l'ensemble des mesures de latence obtenues des liens et Min(latences) est la valeur de latence minimale obtenue parmi l'ensemble des mesures de latence obtenues des liens.

A l'étape E305, le concentrateur associe la variable flexible à chaque lien et la variable non résolu à chaque nœud.

A l'étape E306, le concentrateur sélectionne le premier nœud selon l'ordre déterminé à l'étape E301.

Ainsi selon l'exemple précédent, le nœud C est sélectionné.

A l'étape E307, le concentrateur détermine tous les chemins possibles entre le nœud sélectionné et le nœud racine par exemple à partir des différents liens dont les mesures ont été obtenues à l'étape E303 sans utiliser les liens formant une boucle avec d'autres liens auxquels est associée la variable fixée.

Par exemple, le concentrateur détermine les chemins suivants entre le nœud C sélectionné et le nœud racine R : CR, CAR, CBR, CABR, CBAR, CDAR, CDBR, CDBAR, CEDBR et CEDBAR.

Dans cet exemple, les successions de lettres symbolisent les différents nœuds par lequel le chemin passe.

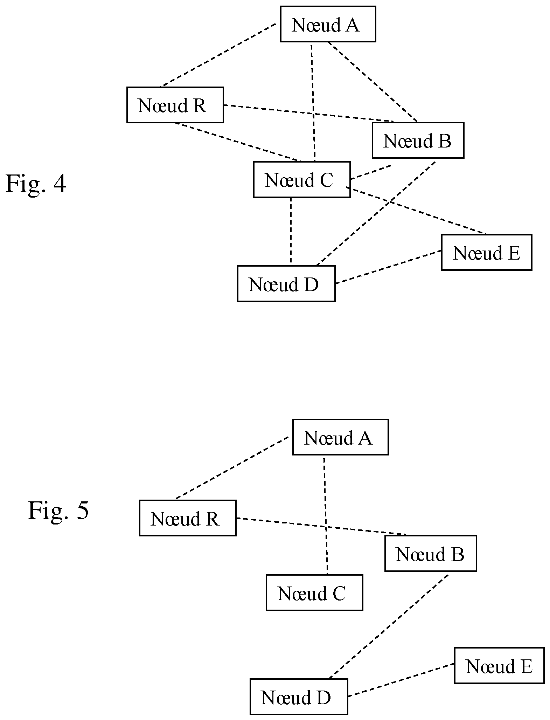

La Fig. 4 illustre un exemple dans lequel tous les liens possibles entre les nœuds C et R du réseau de communication sans fil sont représentés.

A l'étape E308, le concentrateur détermine un score S(C) pour chaque chemin possible entre le nœud sélectionné et le nœud racine selon par exemple la formule suivante :

$$S(C) = \alpha * \sum_{liensl} Co\hat{u}t\_d\acute{e}bit\,(l) + \beta * \sum_{liensl} Co\hat{u}t\_latence\,(l)$$

où α et β prennent les valeurs correspondant à la classe de service du nœud sélectionné, 1 est l'indice associé à chaque lien du chemin.

A l'étape E309, le concentrateur détermine le meilleur chemin parmi tous les chemins possibles à partir des scores calculés à l'étape E308. Le meilleur chemin est le chemin ayant le score minimum.

Ainsi, en utilisant les coefficients α et β qui dépendent de la classe de service du nœud sélectionné, la topologie déterminée est optimale et est adaptée à l'équipement relié au nœud. Par exemple, le meilleur chemin est le chemin CAR.

A l'étape E310, le concentrateur associe la variable fixé à chaque lien du meilleur chemin déterminé.

Par exemple, la variable fixée est associée aux liens entre les nœuds C et A et entre les nœuds A et R.

A l'étape E311, le concentrateur associe la variable résolu aux nœuds par lequel le chemin passe, par exemple aux nœuds C, A et R.

A l'étape E312, le concentrateur vérifie s'il existe un nœud dont la variable associée est non résolu.

Dans l'affirmative, le concentrateur passe à l'étape E314. Dans la négative, le concentrateur passe à l'étape E315.

A l'étape E314, le concentrateur sélectionne le nœud suivant dont la variable associée est non résolu selon l'ordre déterminé à l'étape E301 et retourne à l'étape E307.

Par exemple, le nœud sélectionné est le nœud B.

Le concentrateur exécute les étapes E307 à E312 pour le nœud B sélectionné pour déterminer le chemin optimal reliant le nœud B au nœud R.

Tous les chemins contenant le lien CR sont exclus car ils créent une boucle avec les liens CA et AR.

Par exemple, le meilleur chemin est le chemin BR.

La variable fixée est associée au lien entre les nœuds B et R.

Le concentrateur associe la variable résolu au nœud B.

A l'étape E314, le concentrateur sélectionne le nœud suivant dont la variable associée est non résolu selon l'ordre déterminé à l'étape E301 et retourne à l'étape E307.

Par exemple, le nœud sélectionné est le nœud D.

Le concentrateur exécute les étapes E307 à E312 pour le nœud D sélectionné pour déterminer le chemin optimal reliant le nœud D au nœud R et sélectionne ensuite le nœud E pour l'exécution des étapes E307 à E312 pour déterminer le chemin optimal reliant le nœud E au nœud R.

A l'étape E315, le concentrateur transfère chaque chemin déterminé aux autres nœuds pour une application de la topologie déterminée.

La Fig. 5 illustre un exemple de la topologie des chemins dans le réseau de communication sans fils déterminée par la présente invention.

## Revendications

1. Procédé de détermination d'une topologie d'un réseau de communication sans fils composé d'une pluralité de nœuds connectés ou non respectivement à au moins un équipement, un des nœuds dit nœud racine étant relié à un réseau extérieur, le procédé comportant les étapes de :

    - détermination (E300) d'une classe de service pour chaque nœud, la classe de service étant déterminée en fonction de l'équipement relié au nœud, si le nœud est relié à un téléphone, la classe de service associée au nœud est de la classe voix sur IP VOIP, si le nœud est relié à un décodeur audiovisuel la classe de service associée au nœud est télévision sur IP TV Ultra Haute Définition IPTV UHD, si le nœud est relié à un téléviseur la classe de service associée au nœud est IP TV Haute Définition IPTV HD, pour les autres nœuds la classe de service associée est données, ou la classe de service de chaque nœud correspond à la classe de service déterminée pour chaque nœud par un usager du réseau de communication ou un opérateur du réseau de communication,
    - obtention (E303), de chaque nœud, d'informations représentatives de la qualité du lien entre le nœud et d'autres nœuds,
    - calcul (E304), pour chaque lien, de paramètres représentatifs de la qualité du lien,
    - classement (E301) des nœuds selon leur classe de service et pour les nœuds ayant la même classe de service selon le nombre de liens composant le chemin qui les sépare du nœud racine,
    - détermination (E307), pour chaque nœudet selon le classement, de chemins possibles reliant le nœud au nœud racine,
    - calcul (E308), pour chaque chemin déterminé, d'un score à partir de paramètres représentatifs de la qualité du lien et à partir de valeurs de coefficients dépendantes de la classe de service du nœud,
    - sélection (E309) du chemin pour le nœud ayant le score minimum.

2. Procédé selon la revendication 1, dans lequel lorsqu'un chemin est sélectionné pour un nœud, le procédé comporte en outre les étapes de :

    - association, à chaque lien du chemin sélectionné, d'une variable dite fixée,
    - association, à chaque nœud du chemin par lequel le chemin passe d'une variable résolue, et en ce que la détermination pour chaque nœud suivant, de chemins possibles reliant le nœud suivant au nœud racine est en outre effectuée sans utiliser les liens formant une boucle avec d'autres liens auxquels est associé la variable fixée.

3. Procédé selon la revendication 2, dans lequel la détermination de chemins possibles reliant le nœud suivant au nœud racine est effectuée si le nœud suivant n'est pas associé à la variable résolue.

4. Procédé selon l'une quelconque des revendications précédentes, dans lequel les informations représentatives de la qualité du lien entre le nœud et d'autres nœuds sont le débit physique du lien et la latence.

**5.** Procédé selon l'une quelconque des revendications précédentes, dans lequel le réseau de communication est un réseau domestique.

**6.** Dispositif de détermination d'une topologie d'un réseau de communication sans fils composé d'une pluralité de nœuds connectés ou non respectivement à au moins un équipement, un des nœuds dit nœud racine étant relié à un réseau extérieur, le dispositif de détermination comportant:

- des moyens de détermination d'une classe de service pour chaque nœud, la classe de service étant déterminée en fonction de l'équipement relié au nœud, si le nœud est relié à un téléphone, la classe de service associée au nœud est de la classe voix sur IP VOIP, si le nœud est relié à un décodeur audiovisuel la classe de service associée au nœudest télévision sur IP TV Ultra Haute Définition IPTV UHD, si le nœudest relié à un téléviseur la classe de service associée au nœudest IP TV Haute Définition IPTV HD, pour les autres nœuds la classe de service associée est données, ou la classe de service de chaque nœud correspond à la classe de service déterminée pour chaque noeud par un usager du réseau de communication ou un opérateur du réseau de communication,
- des moyens d'obtention, de chaque nœud, d'informations représentatives de la qualité du lien entre le nœud et d'autres nœuds,
- des moyens de calcul, pour chaque lien, de paramètres représentatifs de la qualité du lien,
- des moyens de classement des nœuds selon leur classe de service et pour les nœuds ayant la même classe de service selon le nombre de liens composant le chemin qui les sépare du nœud racine,
- des moyens de détermination, pour chaque nœud et selon le classement, de chemins possibles reliant le nœud au nœud racine,
- des moyens de calcul, pour chaque chemin déterminé, d'un score à partir de paramètres représentatifs de la qualité du lien et à partir de valeurs de coefficients dépendantes de la classe de service du nœud,
- des moyens de sélection du chemin pour le nœud ayant le score minimum.

**7.** Dispositif selon la revendication 6, dans lequel le dispositif est compris dans un nœud.

**8.** Programme d'ordinateur **caractérisé en ce qu'**il comprend des instructions pour mettre en œuvre, par un dispositif, le procédé selon l'une des revendications 1 à 5, lorsque ledit programme est exécuté par le dispositif.

**9.** Un support d'enregistrement sur lequel est stocké un programme d'ordinateur comprenant des instructions pour mettre en œuvre, par un dispositif, le procédé selon l'une des revendications 1 à 5, lorsque ledit programme est exécuté par le dispositif.

**Patentansprüche**

**1.** Verfahren zur Bestimmung einer Topologie eines drahtlosen Kommunikationsnetzes, das aus einer Vielzahl von Knoten besteht, die mit mindestens einer Ausrüstung verbunden sind oder nicht, wobei einer der Knoten, Wurzelknoten genannt, mit einem externen Netz verbunden ist, wobei das Verfahren die folgenden Schritte aufweist:

- Bestimmung (E300) einer Dienstklasse für jeden Knoten, wobei die Dienstklasse abhängig von der mit dem Knoten verbundenen Ausrüstung bestimmt wird; wenn der Knoten mit einem Telefon verbunden ist, ist die dem Knoten zugeordnete Dienstklasse von der Klasse Voice-over-IP VOIP, wenn der Knoten mit einem audiovisuellen Decoder verbunden ist, ist die dem Knoten zugeordnete Dienstklasse IP-Television Ultra High Definition IPTV UHD, wenn der Knoten mit einem Fernsehapparat verbunden ist, ist die dem Knoten zugeordnete Dienstklasse IPTV High Definition IPTV HD, für die anderen Knoten ist die zugeordnete Dienstklasse Daten, oder die Dienstklasse jedes Knotens entspricht der Dienstklasse, die für jeden Knoten von einem Benutzer des Kommunikationsnetzes oder von einem Betreiber des Kommunikationsnetzes bestimmt wird,
- Erhalt (E303), von jedem Knoten, von für die Qualität des Links zwischen dem Knoten und anderen Knoten repräsentativen Informationen,
- Berechnung (E304), für jeden Link, von für die Qualität des Links repräsentativen Parametern,
- Einordnung (E301) der Knoten gemäß ihrer Dienstklasse und für die Knoten mit der gleichen Dienstklasse gemäß der Anzahl von Links, die den Pfad bilden, die sie vom Wurzelknoten trennt,
- Bestimmung (E307), für jeden Knoten und gemäß der Einordnung, von möglichen Pfaden, die den Knoten mit dem Wurzelknoten verbinden,
- Berechnung (E308), für jeden bestimmten Pfad, eines Score ausgehend von für die Qualität des Links repräsentativen Parametern und ausgehend von Werten von abhängigen Koeffizienten der Dienstklasse des Knotens,
- Auswahl (E309) des Pfads für den Knoten mit dem minimalen Score.

2. Verfahren nach Anspruch 1, wobei, wenn ein Pfad für einen Knoten ausgewählt wird, das Verfahren außerdem die folgenden Schritte aufweist:

- Zuordnung, zu jedem Link des ausgewählten Pfads, einer festgelegt genannten Variablen,
- Zuordnung, zu jedem Knoten des Pfads, über den der Pfad geht, einer aufgelösten Variablen,

und dass die Bestimmung für jeden folgenden Knoten von möglichen Pfaden, die den folgenden Knoten mit dem Wurzelknoten verbinden, außerdem ausgeführt wird ohne Verwendung der Links, die eine Schleife mit anderen Links bilden, denen die festgelegte Variable zugeordnet ist.

3. Verfahren nach Anspruch 2, wobei die Bestimmung von möglichen Pfaden, die den folgenden Knoten mit dem Wurzelknoten verbinden, ausgeführt wird, wenn der folgende Knoten nicht der aufgelösten Variablen zugeordnet ist.

4. Verfahren nach einem der vorhergehenden Ansprüche, wobei die für die Qualität des Links zwischen dem Knoten und anderen Knoten repräsentativen Informationen der physikalische Durchsatz des Links und die Latenz sind.

5. Verfahren nach einem der vorhergehenden Ansprüche, wobei das Kommunikationsnetz ein Heimnetzwerk ist.

6. Vorrichtung zur Bestimmung einer Topologie eines drahtlosen Kommunikationsnetzes bestehend aus einer Vielzahl von Knoten, die mit mindestens einer Ausrüstung verbunden sind oder nicht, wobei einer der Knoten, Wurzelknoten genannt, mit einem externen Netz verbunden ist, wobei die Bestimmungsvorrichtung aufweist:

- Einrichtungen zur Bestimmung einer Dienstklasse für jeden Knoten, wobei die Dienstklasse abhängig von der mit dem Knoten verbundenen Ausrüstung bestimmt wird, wenn der Knoten mit einem Telefon verbunden ist, ist die dem Knoten zugeordnete Dienstklasse von der Klasse Voice-over-IP VOIP, wenn der Knoten mit einem audiovisuellen Decoder verbunden ist, ist die dem Knoten zugeordnete Dienstklasse IP-Television Ultra High Definition IPTV UHD, wenn der Knoten mit einem Fernsehapparat verbunden ist, ist die dem Knoten zugeordnete Dienstklasse IPTV High Definition IPTV HD, für die anderen Knoten ist die zugeordnete Dienstklasse Daten, oder die Dienstklasse jedes Knotens entspricht der Dienstklasse, die für jeden Knoten von einem Benutzer des Kommunikationsnetzes oder von einem Betreiber des Kommunikationsnetzes bestimmt wird,
- Einrichtungen zum Erhalt, von jedem Knoten, von für die Qualität des Links zwischen dem Knoten und anderen Knoten repräsentativen Informationen,
- Einrichtungen zur Berechnung, für jeden Link, von für die Qualität des Links repräsentativen Parametern,
- Einrichtungen zur Einordnung der Knoten gemäß ihrer Dienstklasse und für die Knoten mit der gleichen Dienstklasse gemäß der Anzahl von Links, die den Pfad bilden, der sie vom Wurzelknoten trennt,
- Einrichtungen zur Bestimmung, für jeden Knoten und gemäß der Einordnung, von möglichen Pfaden, die den Knoten mit dem Wurzelknoten verbinden,
- Einrichtungen zur Berechnung, für jeden bestimmten Pfad, eines Score ausgehend von für die Qualität des Links repräsentativen Parametern und ausgehend von Werten von abhängigen Koeffizienten der Dienstklasse des Knotens,
- Einrichtungen zur Auswahl des Pfads für den Knoten mit dem minimalen Score.

7. Vorrichtung nach Anspruch 6, wobei die Vorrichtung in einem Knoten enthalten ist.

8. Computerprogramm, **dadurch gekennzeichnet, dass** es Anweisungen zur Durchführung des Verfahrens nach einem der Ansprüche 1 bis 5 durch eine Vorrichtung enthält, wenn das Programm von der Vorrichtung ausgeführt wird.

9. Speicherträger, auf dem ein Computerprogramm gespeichert ist, das Anweisungen enthält, um das Verfahren nach einem der Ansprüche 1 bis 5 durch eine Vorrichtung durchzuführen, wenn das Programm von der Vorrichtung ausgeführt wird.

**Claims**

1. Method for determining a topology of a wireless communication network composed of a plurality of nodes connected or not connected, respectively, to at least one equipment, one of the nodes, called the root node, being connected to an external network, the method comprising the steps of:

   - determining (E300) a service class for each node, the service class being determined according to the equipment connected to the node, if the node is connected to a telephone, the service class associated with the node is the voice-over-IP class VOIP, if the node is connected to a set-top box, the service class associated with the node is ultra-high-definition television over IP UHD IPTV, if the node is connected to a television, the service class associated with the node is high-definition IPTV HD IPTV, for the other nodes, the associated service class is data, or the service class of each node corresponds to the service class determined for each node by a user of the communication network or an operator of the communication network,
   - obtaining (E303), from each node, information representative of the quality of the link between the node and other nodes,
   - calculating (E304), for each link, parameters representative of the quality of the link,
   - classifying (E301) the nodes according to their service class and for those nodes which have the same service class according to the number of links making up the path separating them from the root node,
   - determining (E307), for each node and according to the classification, possible paths connecting the node to the root node,
   - calculating (E308), for each determined path, a score on the basis of parameters representative of the quality of the link and on the basis of coefficient values dependent on the service class of the node,
   - selecting (E309) the path for the node that has the minimum score.

2. Method according to Claim 1, in which, when a path is selected for a node, the method further comprises the steps of:

   - associating what is referred to as a "fixed" variable with each link of the selected path,
   - associating a resolved variable with each node of the path through which the path passes,
   and in which the determination for each subsequent node of possible paths connecting the subsequent node to the root node is further carried out without using the links forming a loop with other links with which the fixed variable is associated.

3. Method according to Claim 2, in which the determination of possible paths connecting the subsequent node to the root node is carried out if the subsequent node is not associated with the resolved variable.

4. Method according to any one of the preceding claims, in which the information representative of the quality of the link between the node and other nodes is the physical bit rate of the link and the latency.

5. Method according to any one of the preceding claims, in which the communication network is a home network.

6. Device for determining a topology of a wireless communication network composed of a plurality of nodes connected or not connected, respectively, to at least one equipment, one of the nodes, called the root node, being connected to an external network, the determining device comprising:

   - means for determining a service class for each node, the service class being determined according to the equipment connected to the node, if the node is connected to a telephone, the service class associated with the node is the voice-over-IP class VOIP, if the node is connected to a set-top box, the service class associated with the node is ultra-high-definition television over IP UHD IPTV, if the node is connected to a television, the service class associated with the node is high-definition IPTV HD IPTV, for the other nodes, the associated service class is data, or the service class of each node corresponds to the service class determined for each node by a user of the communication network or an operator of the communication network,
   - means for obtaining, from each node, information representative of the quality of the link between the node and other nodes,
   - means for calculating, for each link, parameters representative of the quality of the link,
   - means for classifying the nodes according to their service class and for those nodes which have the same service class according to the number of links making up the path separating them from the root node,
   - means for determining, for each node and according to the classification, possible paths connecting the node to the root node,

- means for calculating, for each determined path, a score on the basis of parameters representative of the quality of the link and on the basis of coefficient values dependent on the service class of the node,
- means for selecting the path for the node that has the minimum score.

7. Device according to Claim 6, in which the device is comprised in a node.

8. Computer program **characterized in that** it comprises instructions for implementing, by means of a device, the method according to one of Claims 1 to 5, when said program is executed by the device.

9. Storage medium on which is stored a computer program comprising instructions for implementing, by means of a device, the method according to one of Claims 1 to 5, when said program is executed by the device.

Fig. 1

Fig. 2

E300 — Détermination classe de service

E301 — Ordonnancement noeuds

E302 — Affectation coefficients à chaque classe

E303 — Collecte Phy rate, latences

E304 — Calcul coût_débit, calcul coût_latence

E305 — Marquage liens noeuds

E306 — Sélection premier noeud

E307 — Détermination de tous les chemins Entre nœud et nœud racine

E308 — Calcul score pour chaque chemin

E309 — Sélection chemin meilleur score

E310 — Marquage liens du chemin fixé

E311 — Marquage noeuds du chemin résolus

E312 — Autre nœud non résolu?

E314 — Suivant

E315 — Application chemins

Fig. 3

Nœud A

Nœud R

Nœud B

Fig. 4

Nœud C

Nœud E

Nœud D

Nœud A

Nœud R

Fig. 5

Nœud B

Nœud C

Nœud E

Nœud D

## RÉFÉRENCES CITÉES DANS LA DESCRIPTION

**Documents brevets cités dans la description**

- EP 2899931 A